# EUROPEAN PATENT SPECIFICATION

(11) **EP 4 650 486 B1**
(45) Date of publication and mention of the grant of the patent: **05.08.2026**
(21) Application number: 24176534.6
(22) Date of filing: 17.05.2024
(51) Int. Cl.: C25B 1/04, C25B 9/19, C25B 9/23, C25B 9/73, C25B 13/02

(54) **MEMBRANE-ELECTRODE ASSEMBLY FOR A STACKABLE ELECTROLYSER CELL, SOLID POLYMER ELECTROLYTE ELECTROLYSER CELL STACK WITH SUCH ASSEMBLY, METHOD OF MANUFACTURING SUCH ASSEMBLY, AND USE OF SUCH ASSEMBLY OR CELL STACK FOR ELECTROLYSIS OF WATER**
MEMBRAN-ELEKTRODEN-EINHEIT FÜR EINE STAPELBARE ELEKTROLYSEZELLE, ELEKTROLYSEZELLENSTAPEL MIT FESTPOLYMERELEKTROLYT UND EINER SOLCHEN EINHEIT, VERFAHREN ZUR HERSTELLUNG EINER SOLCHEN EINHEIT SOWIE VERWENDUNG EINER SOLCHEN EINHEIT ODER EINES SOLCHEN ZELLENSTAPELS ZUR WASSERELEKTROLYSE
ENSEMBLE MEMBRANE-ÉLECTRODE POUR CELLULE D'ÉLECTROLYSEUR EMPILABLE, EMPILEMENT DE CELLULES D'ÉLECTROLYSEUR À ÉLECTROLYTE POLYMÈRE SOLIDE AVEC CET ENSEMBLE, PROCÉDÉ DE FABRICATION DE CET ENSEMBLE, ET UTILISATION DE CET ENSEMBLE OU DE CET EMPILEMENT DE CELLULES POUR L'ÉLECTROLYSE DE L'EAU

(43) Date of publication of application: 19.11.2025
(73) Proprietor: AVL List GmbH, 8020 Graz (AT); AVL Fuel Cell Canada Inc, Burnaby, British Columbia V5A 4W2 (CA)
(72) Inventor: Thomas, Owen, Vancouver BC, V6E 4V3 (CA); Lee, Stephen, Burnaby, V5S 4C1 (CA)
(74) Representative: Gamper, Bettina

(56) References cited:
- US-A1- 2016 104 909
- US-A1- 2017 263 952
- US-A1- 2021 167 409
- US-A1- 2024 141 521

## Description

The present invention relates to a membrane electrode assembly (MEA) for an electrolyser cell with a catalyst coated membrane (CCM), a frame member and two porous transport layers (PTL). The invention also relates to a solid polymer electrolyte electrolyser cell stack, a method of manufacturing said MEA, and the use of such MEA, see claims 1, 12, 13 and 14.

Hydrogen is prescribed an important role in the transformation process towards emissionfree energy generation and energy storage. Hydrogen can be produced in electrolysers through electrolysis of water, a process, where water is split into hydrogen and oxygen by using electricity. Amongst available electrolyser technology, proton exchange membrane (PEM) electrolysers and anion exchange membrane (AEM) electrolysers are considered viable options for producing hydrogen at an industrial scale. Both, PEM and AEM electrolysers, use semipermeable membranes that are made from a solid polymer and are designed to conduct ions, such as cations (often protons, H⁺) or anions (often hydroxide ions, OH⁻), while separating process substances on either side of the membrane and electrically isolating adjacent catalyst layers.

The electrolysis of water poses technical challenges for the components of electrolysers that must be reflected in their design. For example, in operation, the components of the electrolysers are exposed to substantial pressures (e.g. up to 100 bar) and in some cases corrosive substances. Consequently, the components are designed to provide high levels of rigidity and chemical resistance, which often leads to an increase of the material thickness of the components. For example, the PTL on the anode side of the CCM is usually made of metal and, as a result, is rigid.

However, the rigidity of the components can be problematic for areas of the electrolyser, where more than two components are brought together to attach to each other.

Typically, the components of an electrolyser MEA are stacked and attached to each other at a joint area along the outer perimeter of the CCM. Thus, to form an attachment between a component from a lower layer with a component in a higher layer, at least one component must be bent towards the respective other to establish contact. On the way, often additional layers formed by other components must be passed. For example, PTLs are typically arranged as outer layers with respect to a frame and the CCM at the centre. However, due to the rigidity of the PTLs in electrolysers, tight bends are difficult to realise without damaging the components. Also, tight bends (with correspondingly small bending radii) are often insufficient to bridge the distance between the PTL and the CCM because typically, the frame is arranged between these components and because of the dimension of the frame, which in electrolysers typically is relatively thick to withstand operational loads. As a result, some areas of the CCM are not directly connected to the PTL but are separated by a gap between the respective components. Typically, these disconnected areas are found along the outer perimeter of the electrochemically active area of the CCM. Problems associated with the disconnected areas are that electrical and thermal conduction can be difficult to ensure. This leads to poor performance in these areas and may lead to increased local degradation of the CCM.

In known PEM or AEM electrolysers, multiple frame layers and adhesive layers are often used to support the components of the MEA and to avoid or to reduce the formation of such disconnected areas. In particular, the frames have adhesive on one side to bond to the CCM and/or to each other. However, these known PEM or AEM electrolysers are therefore complex in design and manufacture, and require a high number of parts, all of which leading to an increase in costs. Membrane-electrode-frame-assemblies for ion exchange membrane electrolyser are also known from US 2021/167409 A1 (describing the preamble of claim 1), US 2024/141521 A1, US 2017/263952 A1 and US 2016/104909 A1.

It is thus, an object of the invention to overcome at least some of these disadvantages. In particular, it is an object of the invention to provide a design of a membrane electrode assembly that reduces or eliminates the negative effects of the disconnected areas and/or the formation of the disconnected areas.

The foregoing technical problem is solved by the membrane electrode assembly of claim 1, the solid polymer electrolyte electrolyser cell stack of claim 12, the method of manufacturing a membrane electrode assembly of claim 13 and the use of said assembly or of said cell stack for electrolysis of water in accordance with claim 14.

Further advantages and features of the invention are evident from the dependent claims.

Features and details described in connection with the membrane electrode assembly of the invention naturally also apply to the solid polymer electrolyte electrolyser cell stack of the invention and to the method of manufacturing a membrane electrode assembly of the invention, and vice versa, respectively, so that for disclosure, reference is or can be made mutually to the individual aspects of the invention.

A first aspect of the invention relates to a membrane electrode assembly for a stackable electrolyser cell, see claim 1.

The membrane electrode assembly comprises inter alia a catalyst coated membrane (CCM) member, which forms an electrochemically active core unit of the membrane electrode assembly. The CCM member comprises a polymer membrane, which forms a solid electrolyte for exchange of ions between its two opposite membrane sides. The CCM member further comprises one or more catalyst coatings, each of which is receptive to electrons, and -at least partially- applied to both membrane sides. Each of the catalyst coatings forms an electrode for conducting electrons, which are associated with the exchange of ions at the polymer membrane. The membrane electrode assembly further comprises a frame member for mechanical reinforcement. The frame member comprises a frame overlap section and is arranged on one of the membrane sides overlapping a peripheral area of the CCM member with the frame overlap section. The membrane electrode assembly further comprises two porous transport layers (PTL). Each of the PTLs is arranged on one of the membrane sides, forming a diffusor structure for surface distribution and/or collection of fluid process streams of the CCM member. The process streams may interact with the CCM member. The membrane electrode assembly further comprises an adhesive layer, which is provided on the peripheral area of the CCM member on the same side as the frame member. The adhesive layer comprises an adhesive overlap section that overlaps with the frame member and extends inwardly with respect to the peripheral area beyond the frame overlap section to delimit a process area of the CCM member. The adhesive layer forms an adhesive bond between the CCM member and at least the frame member. Preferably, the inside perimeter of this adhesive layer may define the boundary of the process area.

In other words, the invention provides for a membrane electrode assembly for an electrolyser cell that can be arranged and used in a electrolyser stack. The electrolyser cell may be configured for the electrolysis of water.

The MEA comprises a CCM member with a polymer membrane for exchange of ions between its two opposite membrane sides. Therein, the term *"ion"* may be understood as an atom or molecule with a positive or negative electric charge. For instance, the ion may be a cation (e.g. proton, H⁺) or an anion (e.g. hydroxide, OH⁻). The polymer membrane is permeable for ions and may form a barrier to certain substances, such as gases like oxygen or hydrogen. Additionally, the membrane is electrically isolating.

Further, the CCM member comprises a catalyst coating, which is receptive to electrons and at least partially applied to both of the membrane sides. Each of the catalyst coatings forms an electrode. The electrodes may be designed to promote the electrochemical reactions required for electrolyser operation. The electrodes may comprise an anode and a cathode. Anode and cathode may be arranged on anyone of the two membrane sides. The *anode* may be the water side, where water is supplied as reactant and oxidized to oxygen, protons, and electrons. The *cathode* may be the hydrogen side, where supplied electrons and protons, which travelled through the polymer membrane, are combined to form hydrogen.

The MEA further comprises a frame member for mechanical reinforcement. Preferably, the MEA may comprise only a single frame member. Therein, the term *"frame member*" may be understood as a rigid structure for holding the MEA in position and providing sufficient mechanical support for an electrolysis process. For example, significantly higher pressures (e.g. up to 100 bar) may exist in operation of an electrolyser compared to a fuel cell (e.g. up to 10 bar). Preferably, the frame member may have a rectangular cross section with an opening at the centre.

The frame member is arranged on one of the membrane sides overlapping a peripheral area of the CCM member with a frame overlap section.

Therein, the term *"peripheral area"* may be understood as an area of the CCM member in proximity to the outer perimeter of the CCM member and/or that includes the outer perimeter. For instance, the peripheral area may be at the outer edges of the CCM member and/or may extend circumferentially at least partially or completely along the outer edges of the CCM member. The outer edges may define the outer perimeter of the CCM member. The term *"overlap"* may be understood as at least partially covering or extending beyond a structure. The term *"frame overlap section"* may be understood as a volume section of the frame member, which covers at least part of the surface of the CCM member. Preferably, the frame overlap section may define an opening in the frame member for substances to travel to the CCM member for partaking in the electrolysis process.

The MEA further comprises two PTLs. Each of the PTLs is arranged on one of the membrane sides and forms a diffusor structure for surface distribution and/or collection of fluid process streams of the CCM member. For instance, the fluid process streams may be water, hydrogen and oxygen.

The term *"porous transport layer (PTL)"* may be understood as a structure for distributing and/or collecting reactants or by-products across the surface of the electrodes and for the removal of fluid by-products from the electrodes. The PTLs may be made from a porous material. The PTLs may be electrically conductive. The PTLs may be flat, and thus, may have a small thickness relatively to its length and width. Further, the make of the PTL may depend on its location in the MEA and/or the type of exchange membrane electrolyzer in question. At least one of the PTLs may be made of a metal-based material. Therein, the expression "metal-based" may be understood as being made of metal, consisting of metal or at least comprising metal. For instance, said PTL may be made of titanium, titanium coated in platinum or nickel. For example, in PEM electrolysers, the PTL on the anode side may be required to be resistant to high electrical potentials. Similarly, for AEM electrolysers, the PTL on the anode side also may be provided to be resistant to high potentials, and/or resistant to corrosive solutions. For these cases, PTLs comprising metals may be used as materials for the anode in PEM and AEM electrolysers. However, any material composition suitable for sustaining the high electric potentials found at anodes of electrolysers can be considered. In comparison, in AEM and PEM designs, cathode potentials are typically lower. Thus, in such cases, PTLs comprising carbon may be used at the cathode.

The MEA further comprises an adhesive layer that forms an adhesive bond between the CCM member and at least the frame member. Preferably, the MEA may only comprise a single adhesive layer. The adhesive layer comprises an adhesive overlap section, which overlaps with the frame member and which extends inwardly with respect to the peripheral area beyond the frame overlap section to delimit a process area of the CCM member. Preferably, the inside perimeter of the adhesive layer may delimit the process area of the CCM member.

Therein, the term *"adhesive layer"* may be understood as a defined volume, film or sheet made of a material capable of adhering to components of the MEA. The term *"bond"* may be understood as a joint between at least two components having a strong material connection. For instance, the adjoining materials may be joined by surface bonding, which preferably may be initiated through chemical activation. Further, the term *"adhesive overlap section"* may be understood as a volume section of the adhesive layer, which covers at least part of the surface of the CCM member. The term *"process area"* may be understood as a surface area that is actually available for electrochemical processing of reactants.

With the above-described design of the MEA according to the invention, it is possible to deactivate the chemically active surface of the CCM member along the inner edge of the frame member because the adhesive overlap section extends beyond the frame overlap section. Thus, the adhesive overlap section provides a protective cover for the CCM member. Accordingly, the effects of the existing corrosive environment, such as chemical degradation of the CCM member, can be reduced or even eliminated for this sheltered region of the MEA. Moreover, the adhesive overlap section can provide a bonding surface to bond with the PTL on the same side as the frame member and thus, allows to simplify the manufacturing process of the MEA.

According to a preferred embodiment, the one PTL, which is on the same side as the frame member, may be arranged laterally from the frame overlap section on the adhesive overlap section and may overlap at least partially with the process area. Therein, the adhesive overlap section may form an adhesive bond between the CCM member and the PTL.

Thereby, it can be avoided that the PTL must be bent over a thick frame member to form an attachment between the PTL and the CCM member. Accordingly, the risk of the PTL breaking when bending during manufacturing can be reduced. Also, a wide bending radius to connect the PTL with the CCM member can be avoided. Instead, with the above configuration, the PTL is set on top of the adhesive overlap section and process area while being surrounded by the frame overlap section. Consequently, the creation of areas on the CCM member that are in disconnect from the PTL can be reduced or even eliminated. Instead, the bonding region of the PTL to the CCM member via the adhesive overlap section can be kept short and still provides for a smooth transition. Accordingly, electrical and thermal conduction in this region can be ensured, resulting in evenly spread electric potentials and temperatures. Also, fluids can be distributed evenly over the process area. Thus, chemical degradation can be reduced.

Preferably, the PTL may be arranged adjacent to the frame overlap section and may form a circumferential gap separating the PTL and the frame overlap section. Preferably, the gap may be at least partially filled with an adhesive material. For instance, the adhesive material filling the gap may extend from the adhesive overlap section. The adhesive material may be the same or different from the adhesive layer. Alternatively or additionally, the adhesive material may be solidified adhesive from the adhesive layer received by the gap from an application of pressure onto the adhesive layer with the PTL.

With the above arrangement, glue can flow into the small gap between the PTL and the frame overlap section as well as into the open pores of the PTL when the MEA is compressed for manufacturing. Thereby, the bond between the CCM member and the PTL can be improved since the adhesive bond can be provided from at least two sides. Moreover, the adhesive material from the adhesive overlap section provides mechanical protection for the CCM member against sharp edges of the PTL. Typically, the PTL may be cut to size and thus, may have rough edges that could scratch the catalyst coating or otherwise damage the CCM member. Accordingly, the mechanical durability of the MEA can be improved with the above arrangement.

Alternatively or additionally, the PTL may be arranged in direct contact with the frame overlap section.

Thereby, the available process area can be optimized.

Preferably, the CCM member, the adhesive layer and the frame member may be stacked in a stacking direction in this order. Further, in the above described lateral arrangement of the one PTL next to the frame member, the frame member may extends at least at the frame overlap section from the adhesive layer in the stacking direction beyond the one PTL.

Thereby, it can be ensured that the joint region of the MEA extends beyond the PTL on the one membrane side, which allows for good compression of the MEA from at least this side.

According to a further preferred embodiment, the one PTL, which is on the same side as the frame member, may be arranged on the frame member (or, more specifically, the frame overlap section), in a manner overlapping at least the frame overlap section and at least partially the process area.

Thereby, it is possible to simplify the manufacturing step of connecting the PTL on the same side as the frame member. Due to the adhesive overlap section projecting beyond the frame overlap section, effects of disconnected areas, if existent, can be lessened or even eliminated.

According to a preferred embodiment, the polymer membrane is a proton-exchange membrane (PEM) or an anion-exchange membrane (AEM).

Thereby, different membrane technologies can be utilized in the MEA design.

According to the invention, the other PTL may be arranged on the other membrane side, overlapping the peripheral area. Preferably, the other PTL (i.e. the one on the other membrane side) comprises a joining section for forming a substance-to-substance bond with the CCM member. Therein, the joining section comprises a surface to bond to another surface. For instance, the polymer of the CCM member flows into a porous structure of the PTL to form the bond. Additionally, both of the PTLs may be metal-based. Alternatively, one of the PTL may be metal-based and the other PTL may be carbon-based. At least the PTL on the same side as the frame member comprises may be metal-based.

According to a preferred embodiment, the catalyst coating may cover the polymer membrane on at least one of the membrane sides at least partially. Preferably, the CCM member may comprise at least one membrane section, which comprises a surface structure different from the catalyst coating. For example, the membrane section may extend at the peripheral area. The membrane section is an uncoated surface section exposing a polymeric surface of the polymer membrane. The membrane section and an opposing surface area of one of the PTLs form a substance-to-substance bond. The polymer of the CCM member flows into the porous structure of the respective PTL to form the bond.

A reliable connection between all components of the MEA can be ensured without having to provide a further adhesive layer to establish said connection.

According to a preferred embodiment, the adhesive layer may extend with the adhesive overlap section on the CCM member at least partially or completely with the frame overlap section. In other words, the adhesive overlap section may extend the same way as the frame overlap section in length-wise and/or width-wise direction.

Thereby, the beneficial effects of the inventive design can be further amplified across the entire surface of the CCM member.

According to a further preferred embodiment, the adhesive layer may comprise an adhesive peripheral section, which comprises an end that is directed so that it faces in an opposite direction than the adhesive overlap section. Preferably, the adhesive peripheral section may extend beyond the peripheral area. Alternatively, the adhesive peripheral section may extend so that its end is flush with a peripheral edge of the peripheral area.

Thereby, manufacturing of the MEA can be simplified. Furthermore, by extending the adhesive beyond the peripheral area, the adhesive bond between the frame member and the CCM member can be improved.

According to a preferred embodiment, the adhesive layer may comprise an electrochemically inert material. Alternatively or additionally, the adhesive layer may be a glue film. Alternatively or additionally, the adhesive layer may comprise a polymer selected from the group comprising epoxies, urethanes, polyisobutylene, polyolefins, polyethylene and curable cross-linking agents.

Thereby, a bond between the respective components of the MEA can be quickly and reliably established.

A further aspect of the present invention relates to a solid polymer electrolyte electrolyser cell stack, which comprises a series stack of a plurality of the above-described membrane electrode assemblies.

Thereby, the same advantages and effects can be achieved as described already above for the MEA. In particular, chemical degradation and manufacturing costs can be reduced due to the advantageous design of the MEA.

A further aspect of the present invention relates to a use of the above-described membrane electrode assembly or of the above-described solid polymer electrolyte electrolyser cell stack for electrolysis of water, respectively.

Thereby, electrolysis of water can be completed reliably and with the MEA undergoing less chemical degradation.

A further aspect of the present invention relates to a method of manufacturing the above-described membrane electrode assembly. The method comprises the steps of obtaining the CCM member, the frame member, the two PTLs, and the adhesive layer. The CCM member, the PTLs, the frame, and the adhesive layer are stacked such that the frame member is located on one of the membrane sides, and the adhesive layer is located between the frame member and the CCM member. Further, one of the PTLs is located within or at least partially overlapping the frame member. The other of the PTL is located on the other of the membrane sides and adjacent to the CCM member. The CCM member, the frame member, and the adhesive layer are aligned such that each of the peripheral area of the CCM member and the frame overlap section overlaps at least partially with the adhesive overlap section when seen in a cross-section, and such that the adhesive overlap section extends inwardly with respect to the peripheral area beyond the frame overlap to delimit the process area of the CCM member. The adhesive layer is activated at least at the adhesive overlap section such that the adhesive layer bonds at least the frame member and the one PTL to the CCM member.

Therein, the term *"activating"* may refer to a process which renders an adhesive "sticky" and/or capable of adhering to various components of the MEA. For instance, activating may include the process of curing a curable adhesive such as an epoxy. Activating may also include the process of thermally treating a thermosetting adhesive such as urethane or a polyisobutylene or a thermoplastic adhesive such as a polyolefin. Further, activating may include chemically treating a suitable chemically activated adhesive material (e.g. activating using UV radiation). Thus, depending on the nature of the materials used in the adhesive layer, an activating step may include curing, thermally activating, and/or chemically activating.

As described already above, this configuration of the manufacturing process allows that manufacturing complexity, time and costs can be reduced since only a small number of parts is needed to form the MEA for an electrolyser cell. Further, by manufacturing the MEA in this manner, the detrimental effects of chemical degradation can be reduced or even eliminated, and the durability of the MEA can be improved.

These and other aspects of the invention are evident upon reference to the attached Figures and following detailed description.
- **Figures 1 to 7**: show schematic close-up cross-sectional views along line A-A and/or line B-B in Figure 8 for different embodiments of the MEA of the invention in the vicinity of the frame.
- **Figure 8**: shows a schematic top view of a further embodiment of a MEA of the invention.

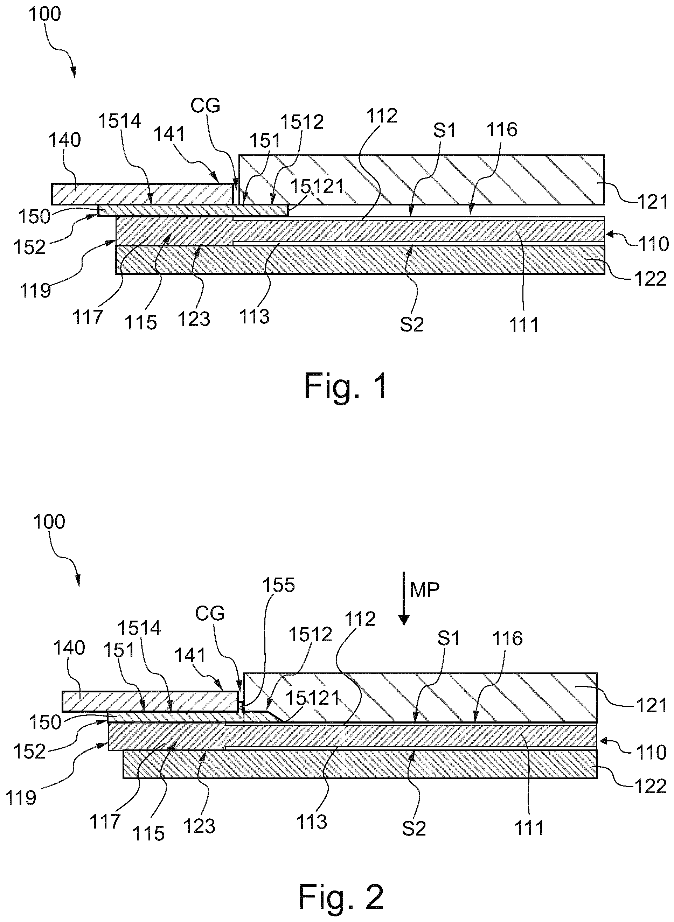

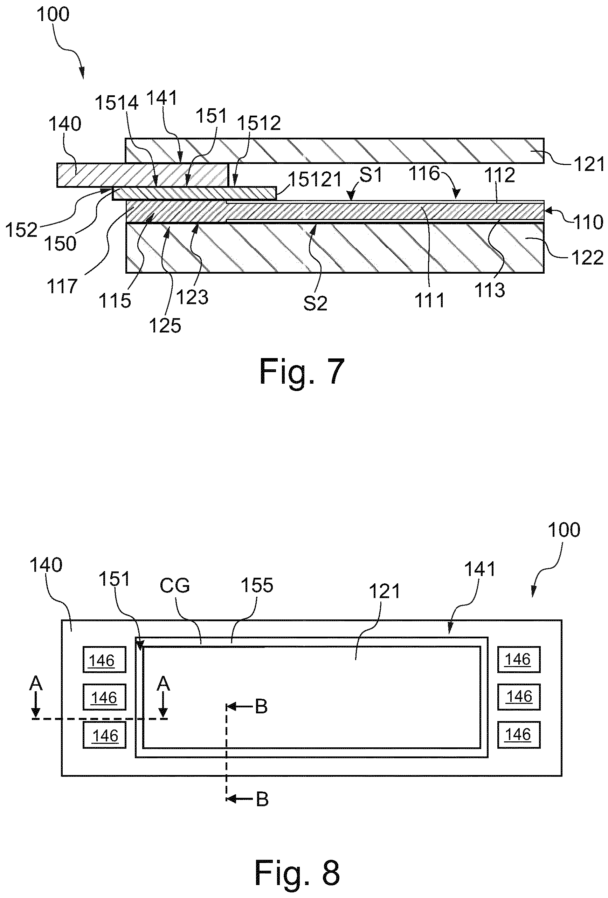

Figures 1 to 8 show different views and different aspects of different embodiments of a MEA 100 of the invention. Figures 1 to 7 represent sectional views along line A-A and/or line B-B in Figure 8. The MEA 100 is configured to be used in a stackable electrolyser cell for the for electrolysis of water. Typically, in industrial applications, a solid polymer electrolyte electrolyser cell stack is used for this purpose, in which a plurality of the MEA 100 is stacked and connected in series. Such an electrolyser cell stack also forms part of the invention, despite not being explicitly illustrated in the Figures.

As can be taken from Figures 1 to 8, the MEA 100 comprises a CCM member 110. The CCM member 110 is the electrochemically active core unit of the MEA 100 and comprises a polymer membrane 111, which forms a solid electrolyte for exchange of ions between its two opposite membrane sides S1, S2. For example, the polymer membrane 111 can be a proton-exchange membrane or an anion-exchange membrane. Accordingly, depending on the type of membrane used, the polymer membrane 111 may form a solid electrolyte for exchange of cations or anions. Further, the CCM member 110 may have any shape, such as rectangular, and may have a film-like or plate-like form. The CCM member 110 may be provided as a flexible film material, for example.

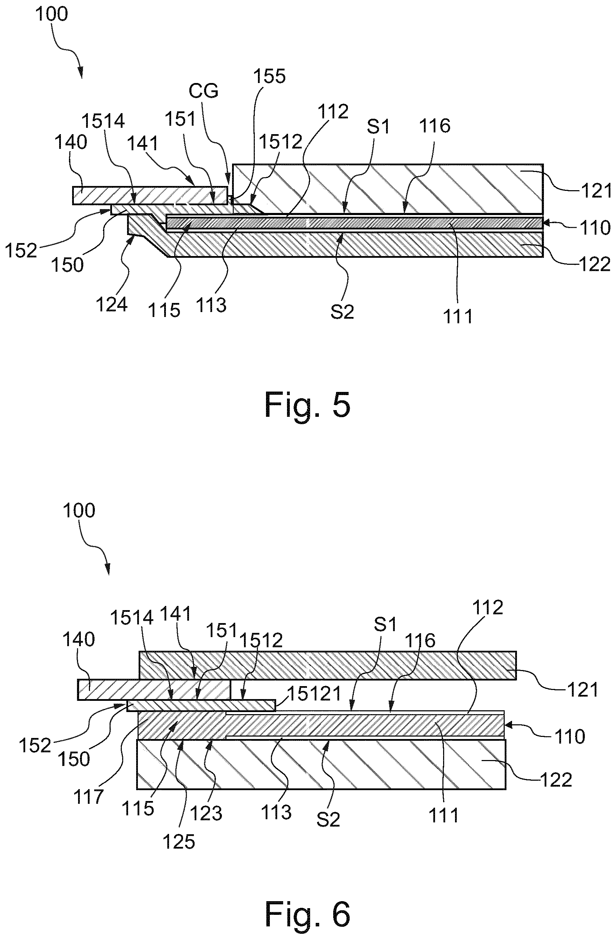

On both membrane sides S1, S2, a catalyst coating 112, 113 is applied, which is receptive to electrons, and which extends on each of the membrane sides S1, S2 at least partially. For example, Figures 1-4, 6 and 7 show a configuration of the CCM member 110, in which the polymer membrane 111 is only partially covered on both membrane sides S1, S2 with the catalyst coating 112, 113, because a membrane section 117 is provided, which is an uncoated surface section that exposes a polymeric surface of the polymer membrane 111. In the illustrated examples, the membrane section 117 extends at a peripheral area 115 of the CCM member 110 on both membrane sides S1, S2. However, these are only examples and not a complete enumeration. Figure 5 shows an alternative configuration not covered by the present invention of the CCM member 110, in which the polymer membrane 111 is completely covered on both membrane sides S1, S2 by the catalyst coatings 112, 113. Thus, the polymer membrane 111 may be window coated or non-window coated with the catalyst coatings 112, 113.

Each of the catalyst coatings 112, 113 forms an electrode for conducting electrons associated with the exchange of ions at the polymer membrane 111. Therein, each of the catalyst coatings 112, 113 may be configured to function either as an anode or a cathode in the electrolysis process. Therefore, in the following no further reference is made regarding the arrangement of the anode and the cathode, as either of the two catalyst coatings 112, 113 may function as one or the other. Further, the extensions of the catalyst coatings 112, 113 may define the extent of the generally available electrochemically active area of the CCM member 110, i.e. the active area before being assembled in the MEA 100.

As can be taken further from the Figures 1 to 8, the MEA 100 also comprises a frame member 140 for mechanical reinforcement of the MEA 100 in a stack as well as for holding the CCM member 110 in place. In the example shown in Figure 8, the frame member 140 may comprise rectangular shape with a rectangular through hole. Figure 8 further illustrates that frame member 140 may comprise ports 146 for the transport of process streams to and from the electrolyser cell.

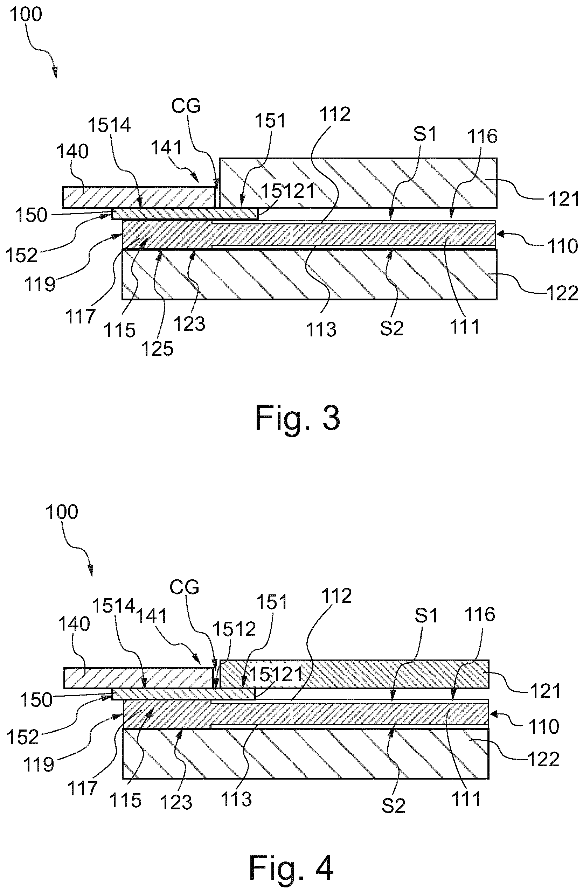

As can be taken further from the Figures 1 to 8, the MEA 100 also comprises two PTLs 121, 122. The PTLs 121, 122 are configured to form a diffusor structure for surface distribution and/or collection of fluid process streams of the CCM member 110. At least one of the two PTLs 121, 122 may be metal-based or any material composition otherwise suitable for receiving or sustaining the high potentials that can be found at an anode of an electrolyser. Preferably, the catalyst coating 112, 113 on the membrane side S1, S2 where the metal-based PTL 121, 122 is provided, may function as anode of the MEA 100. However, it is conceivable to provide both or only one of the PTLs 121, 122 from a metal-based material and thus, irrespective of the location of the anode or cathode. Figures 3 and 7 show such exemplary configurations of the MEA 100 with the two PTLs 121, 122 being both metal-based. Alternatively, Figures 1, 2 and 4 to 6 show exemplary configurations of the MEA 100 with the two PTLs 121, 122 where one of the PTLs 121, 122 is made of a carbon-based material (narrow hatching) for interaction with a cathodeand the other is made of a metal-based material (wide hatching) for interaction with an anode.

As can be taken further from the Figures 1 to 8, the MEA 100 also comprises an adhesive layer 150 for forming an adhesive bond between the CCM member 110, the frame member 140 and at least the one PTL 121, 122. For example, the adhesive layer 150 may be provided as a glue film and may comprise a polymer selected from the group of epoxies, urethanes, polyisobutylene, polyolefins, polyethylene and curable cross-linking agents.

In the following, relative positioning of the above-described components of the MEA 100 to each other is described.

The CCM member 110, the frame member 140, the PTLs 121, 122, and the adhesive layer 150 are arranged in the MEA 100 in a stacked manner along a stacking direction. In Figures 1 to 8, the stacking direction is substantially perpendicular to the extension plane of the CCM member 110.

Specifically, the frame member 140 is located on one of the membrane sides S1, S2. In the Figures, the frame member 140 is exemplarily illustrated as being located on the membrane side S1. The adhesive layer 150 is located between the frame member 140 and the CCM member 110. Further, the frame member 140 is arranged adjacent to one of the PTLs 121, 122. For instance, the one PTL 121, 122 may be arranged to be adjacent in the stacking direction (i.e. overlapping), or laterally (i.e. next) thereto. For instance, in Figures 1 to 5 and 8, the one PTL 121 is illustrated as being arranged next to and within the frame member 140. In Figures 6 and 7, the PTL 121 is exemplarily illustrated as being adjacent to the frame member 140 in the stacking direction, thus in a manner arranged on top of the frame member 140. Further, in the stack of the MEA 100, the other of the PTLs 121, 122 is located on the other of the membrane sides S1, S2 adjacent to the CCM member 110. For example, in Figures 1 to 7, the CCM member 110 is exemplarily illustrated as being adjacent to the other PTL 122.

Figures 1 to 7 also show that the frame member 140 overlaps the peripheral area 115 of the CCM member 110 with a frame overlap section 141. Preferably, the frame overlap section 141 may surround an opening in the frame member 140 as shown in Figure 8.

Figures 1 to 7 also show that the adhesive layer 150 is provided on the peripheral area 115 of the CCM member 110 on the membrane side S1 and adjacent to the frame member 140. Specifically, the adhesive layer 150 comprises an adhesive overlap section 151 that overlaps with the frame member 140. In particular, a first portion 1514 of the adhesive overlap section 151 overlaps with the frame overlap section 141 at the peripheral area 115.

The adhesive overlap section 151 is further provided on the CCM member 110 such that it extends inwardly with respect to the peripheral area 115 beyond the frame overlap section 141. Thus, the adhesive overlap section 151 comprises a second portion 1512 that covers further parts of the surface of the CCM member 110 beyond the peripheral area 115. Accordingly, the second portion 1512 covers also other parts of the surface of the CCM member 110 than the frame overlap section 141. Thus, the adhesive overlap section 151 delimits the active area of the CCM membrane 110 available for electrochemical processing, and thus delimits a process area 116 of the CCM membrane 110. In other words, an inside edge 15121 of the adhesive overlap section 151 may mark the boundary of the process area 116.

With an activation of the adhesive material of at least the adhesive overlap section 151, preferably at the first portion 1514, an adhesive bond between the CCM member 110 and the frame member 140 can be formed. The adhesive overlap section 151 may also overlap with the PTL 121, preferably at least partially with the second portion 1512.

As exemplarily shown in Figure 8, the adhesive overlap section 151 may extend on the CCM member 110 at least partially or completely with the frame overlap section 141. On the side of the adhesive layer 150 opposite to the adhesive overlap section 151, the adhesive layer 150 may extend to be flush with a peripheral edge 119 of the peripheral area 115 (Figure 2) or it may extend beyond said edge 119 (Figures 1 and 3 to 7).

Figure 8 further shows exemplarily that the components of the MEA 100 may be centred with respect to the CCM member 110. Preferably, the MEA 100 may comprise one or more symmetry axes. More preferred, the MEA 100 may comprise symmetry axis that may be aligned with at least one of the symmetry axes of the CCM member 110.

Figures 1 and 2 show an exemplarily embodiment of the MEA 100, in which the PTL 121 at the membrane side S1 may be metal-based (symbolized by wide hatching) and the PTL 122 at the membrane side S2 may be carbon-based (symbolized by narrow hatching). The PTL 121 may be arranged laterally from the frame overlap section 141 and may overlap the adhesive overlap section 151 to form an adhesive bond between the CCM member 110 and the PTL 121. As can be taken further from the Figures, the PTL 121 may be arranged adjacent but at a distance to the frame overlap section 141 so that a small circumferential gap CG is formed, by which the PTL 121 is separated from the frame overlap section 141. In Figure 2, the MEA 100 of Figure 1 is shown after a manufacturing step of activating the adhesive layer 150 through the application of a manufacturing pressure MP (indicated by an arrow). Due to the application of pressure onto the PTL 121, adhesive material 155 from the adhesive overlap section 151 may become viscous and may at least partially fill the circumferential gap CG before solidifying again. Thus, an adhesive bond may be formed between the CCM member 110 and the PTL 121 as well as between the PTL 121 and the frame member 110. In particular, the adhesive material 155 may form a protective layer for the frame member 140 and the CCM member 110 from potentially sharp edges of the PTL 121.

Figures 3 and 4 show exemplarily embodiments of the MEA 100 similar to Figure 1. For instance, in Figure 4, the configuration of the PTLs 121, 122 is reversed to the configuration shown in Figure 1, so that the PTL 121 is carbon-based and the PTL 122 is metal-based or any material composition suitable for sustaining the high electric potentials found at anodes of electrolysers. In Figure 3, both PTLs 121, 122 are provided metal-based or in any other material composition suitable for sustaining the high electric potentials typically found at anodes of electrolysers.

Except for Figure 5, all examples illustrate the MEA 100 with the CCM member 110 comprising the membrane section 117, which comprises at the peripheral area 115 an uncoated surface section exposing a polymeric surface of the polymer membrane 111 on both membrane sides S1, S2. In the examples from the Figures, the membrane section 117 facilitates a substance-to-substance bond with an opposing surface area 123 of a joining section 125 of the PTL 122. For instance, the polymer of the CCM member 110 may flow into the porous structure of the PTL 122 to form the bond. For clarity, this is only shown in Figures 3, 6 and 7 but equally applicable for all other embodiments comprising the membrane section 117. Accordingly, no additional adhesive is needed in the MEA 100 to bond the other PTL 122 to the CCM member 100.

Figure 5 shows an MEA 100 similar to Figure 1, but not covered by the present invention. Unlike in Figure 1, the CCM member 110 of Figure 5 is completely covered by the catalyst coating 112, 113. Thus, unlike in the other Figures, substance-to-substance bonding between the CCM member 110 and the PTL 122 is not available. Therefore, the PTL 122 extends with a peripheral edge section 124 beyond the peripheral area 115 to provide a bonding surface for adhesive bonding with the frame member 140 via the adhesive layer 150. Therein, preferably, the adhesive layer 150 may comprise an adhesive peripheral section 152 that faces in an opposite direction to the adhesive overlap section 151 and that extends from the adhesive overlap section 151 beyond the peripheral area 115. Thus, no additional adhesive application steps are needed to bond the PTL 122 to the CCM member 110.

Figures 6 and 7 show exemplary embodiments of the MEA 100, in which the PTL 121 is arranged on the frame member 140 overlapping at least the frame overlap section 141 and the process area 116. The bond between the PTL 121 and the CCM member 110 may be formed via the adhesive overlap section 151 or via substance-to-substance bonding. In any case, the adhesive overlap section 151 provides protection of corner sections of the CCM member 110 against chemical degradation. Specifically, the PTL 121 in Figure 6 is carbon-based and thus, may be provided as a flexible layer that allows tight bending. The other PTL 122 is metal-based. In Figure 7, both PTL 121, 122 are provided as being metal-based. However, the PTL 121 is provided with smaller material thickness to make the PTL 121 less rigid.

The invention is not limited by the embodiments as described hereinabove, as long as being covered by the appended claims.

### Reference signs

- 100: membrane electrode assembly
- 110: catalyst coated membrane member, CCM member
- 111: polymer membrane
- 112, 113: catalyst coating
- 115: peripheral area
- 116: process area
- 117: membrane section
- 119: peripheral edge
- 121, 122: porous transport layers, PTL
- 123: polymeric surface area
- 124: peripheral edge section
- 125: joining section
- 140: frame member
- 141: frame overlap section
- 146: ports
- 150: adhesive layer
- 151: adhesive overlap section
- 1512: second portion
- 15121: inside edge
- 1514: first portion
- 152: adhesive peripheral section
- 155: adhesive filling material
- CG: circumferential gap
- MP: manufacturing pressure
- S1, S2: membrane sides

## Claims

1. A membrane electrode assembly (100) for a stackable electrolyser cell, comprising:
a catalyst coated membrane (CCM) member (110) forming an electrochemically active core unit of the membrane electrode assembly (100), comprising:
a polymer membrane (111) forming a solid electrolyte for exchange of ions between its two opposite membrane sides (S1, S2), and
a catalyst coating (112, 113) receptive to electrons, applied at least partially to both membrane sides (S1, S2), each forming an electrode for conducting electrons associated with the exchange of ions at the polymer membrane (111);
a frame member (140) for mechanical reinforcement, the frame member (140) being arranged on one of the membrane sides (S1, S2) overlapping a peripheral area (115) of the CCM member (110) with a frame overlap section (141); and
two porous transport layers (PTL) (121, 122), each arranged on one of the membrane sides (S1, S2), forming a diffusor structure for surface distribution and/or collection of fluid process streams of the CCM member (110);
an adhesive layer (150) provided on the peripheral area (115) of the CCM member (110) on the same membrane side (S1, S2) as the frame member (140), comprising an adhesive overlap section (151) that overlaps the frame member (140), forming an adhesive bond between the CCM member (110) and at least the frame member (140), wherein the adhesive overlap section (151) extends inwardly with respect to the peripheral area (115) beyond the frame overlap section (141) to delimit a process area (116) of the CCM member (110),
the membrane electrode assembly being **characterized by**:
at least one or both of the PTLs (121, 122) are made of a metal-based material, in particular selected from titanium, titanium coated with platinum and nickel,
wherein at least the PTL (121) on the same membrane side (S1) as the frame member (140) is the at least one metal-based PTL (121) which is provided on an anode-side one of the membrane sides (S1) and is rigid due to its metal-based construction,
and wherein one of the PTLs (121, 122) is the other PTL (122) arranged on the other of the membrane
sides (S2), overlapping the peripheral area (115), and wherein the CCM member (110) comprises a membrane section (117), which comprises at the peripheral area (115) an uncoated surface section exposing a polymeric surface of the polymer membrane (111) on both membrane sides (S1, S2) creating a porous structure, and the other PTL (122) comprises a joining section (125)fer forming a substance-to-substance bond with the CCM member (110), wherein the joining section (125) comprises the porous structure into which a polymer of the polymer membrane (111) has flown during bonding, so as to form a substance-to-substance mechanical and electrical connection between the polymer membrane (111) and the respective PTL (121, 122).

2. The membrane electrode assembly (100) according to claim 1, wherein the PTL (121, 122), which is on the same membrane side (S1, S2) as the frame member (140), is arranged laterally from the frame overlap section (141) on the adhesive overlap section (151) overlapping at least partially with the process area (116), the adhesive overlap section (151) forming an adhesive bond between the CCM member (110) and the PTL (121, 122).

3. The membrane electrode assembly (100) according to claim 2, wherein the PTL (121, 122) is arranged adjacent to the frame overlap section (141), forming a circumferential gap (CG) separating the PTL (121, 122) and the frame overlap section (141), and/or
wherein the PTL (121, 122) is arranged in direct contact with the frame overlap section (141).

4. The membrane electrode assembly (100) according to claim 3, wherein the circumferential gap (CG) is at least partially filled with an adhesive material (155), preferably extending from the adhesive overlap section (151),
wherein preferably the adhesive material is the same or different from the adhesive layer (150), and/or
wherein preferably the adhesive material (155) is solidified adhesive from the adhesive layer (150) received by the circumferential gap (CG) from an application of pressure onto the adhesive layer (150) with the PTL (121, 122).

5. The membrane electrode assembly (100) according to anyone of claims 2 to 4, wherein the CCM member (110), the adhesive layer (150) and the frame member (140) are stacked in a stacking direction in this order, wherein the frame member (140) extends at least at the frame overlap section (141) from the adhesive layer (150) in the stacking direction beyond the one PTL (121, 122).

6. The membrane electrode assembly (100) according to claim 1, wherein the PTL (121, 122), which is on the same membrane side (S1, S2) as the frame member (140), is arranged on the frame member (140) overlapping at least the frame overlap section (141) and at least partially the process area (116).

7. The membrane electrode assembly (100) according to anyone of the preceding claims,
wherein the other one of the PTLs (121, 122), which is on the other membrane side (S1, S2) as the frame member (140), is made of a carbon-based material.

8. The membrane electrode assembly (100) according to anyone of the preceding claims, wherein the catalyst coating (112, 113) covers the polymer membrane (111) on at least one of the membrane sides (S1, S2) at least partially, wherein preferably the CCM member (110) comprises at least one membrane section (117), which comprises a surface structure different from the catalyst coating (112, 113), such as an uncoated surface section (117) exposing a polymeric surface of the polymer membrane (111), and which more preferred extends at the peripheral area (115), and
wherein preferably the membrane section (117) and an opposing surface area (123) of one of the PTLs (121, 122) form a substance-to-substance bond.

9. The membrane electrode assembly (100) according to anyone of the preceding claims, wherein the catalyst coating (112, 113) covers the polymer membrane (111) on at least one of the membrane sides (S1, S2) completely, wherein preferably the PTL (121, 122) on the other of the membrane sides (S1, S2) extends with a peripheral edge section (124) at least partially beyond the peripheral area (115) to provide a bonding surface for adhesive bonding with the frame member (140).

10. The membrane electrode assembly (100) according to anyone of the preceding claims, wherein the adhesive layer (150) extends with the adhesive overlap section (151) on the CCM member (110) at least partially or completely with the frame overlap section (141), and/or
wherein the adhesive layer (150) comprises an adhesive peripheral section (152) facing opposite to the adhesive overlap section (151), wherein the adhesive peripheral section (152) extends from the adhesive overlap section (151) beyond the peripheral area (115), or wherein the adhesive overlap section (151) extends to be flush with a peripheral edge (119) of the peripheral area (115).

11. The membrane electrode assembly (100) according to anyone of the preceding claims, wherein the adhesive layer (150)
- comprises an electrochemically inert material,
- is a glue film, and/or
- comprises a polymer selected from the group comprising epoxies, urethanes, polyisobutylene, polyolefins, polyethylene and curable cross-linking agents.

12. A solid polymer electrolyte electrolyser cell stack, **characterized by** comprising a series stack of a plurality of the membrane electrode assemblies (100) according to anyone of the preceding claims.

13. A method of manufacturing the membrane electrode assembly (100) of one of the claims 1 to 11, comprising the steps of:
- obtaining the CCM member (110);
- obtaining the frame member (140);
- obtaining the two PTLs (121, 122);
- obtaining the adhesive layer (150);
**characterized by**
- stacking the CCM member (110), the PTLs (121, 122), the frame member (140), and the adhesive layer (150) such that
∘ the frame member (140) is located on one of the membrane sides (S1, S2);
∘ the adhesive layer (150) is located between the frame member (140) and the CCM member (110);
∘ one of the PTLs (121, 122) is located within or at least partially on the frame member (140);
∘ the other of the PTLs (121, 122) is located adjacent to the CCM member (110) on the other of the membrane sides (S1, S2);
- aligning the CCM member (110), the frame member (140), and the adhesive layer (150) such that
∘ each of the peripheral area (115) of the CCM member (110) and the frame overlap section (141) overlaps at least partially with the adhesive overlap section (151) when seen in a cross-section, and
∘ the adhesive overlap section (151) extends inwardly with respect to the peripheral area (115) beyond the frame overlap section (141) to delimit the process area (116) of the CCM member (110); and
- activating the adhesive layer (150) at least at the adhesive overlap section (151) such that the adhesive layer (150) bonds the frame member (140) and the PTL (121, 122) to the CCM member (110).

14. Use of the membrane electrode assembly (100) of one of the claims 1 to 11 or of the solid polymer electrolyte electrolyser cell stack of claim 12 for electrolysis of water.

## Patentansprüche

1. Membran-Elektroden-Anordnung (100) für eine stapelbare Elektrolysezelle, umfassend:
ein katalysatorbeschichtetes Membranelement (110), das eine elektrochemisch aktive Kerneinheit der Membran-Elektroden-Anordnung (100) bildet, umfassend:
eine Polymermembran (111), die einen Festelektrolyten für den Ionenaustausch zwischen ihren beiden gegenüberliegenden Membranseiten (S1, S2) bildet, und
eine Katalysatorbeschichtung (112, 113), die Elektronen aufnimmt und zumindest teilweise auf beide Membranseiten (S1, S2) aufgebracht ist, wobei jede Seite eine Elektrode zur Leitung von Elektronen bildet, die mit dem Austausch von Ionen an der Polymermembran (111) verbunden sind;
ein Rahmenelement (140) zur mechanischen Verstärkung, wobei das Rahmenelement (140) auf einer der Membranseiten (S1, S2) angeordnet ist und einen Umfangsbereich (115) des katalysatorbeschichteten Membranelements (110) mit einem Rahmenüberlappungsabschnitt (141) überlappt; und
zwei poröse Transportschichten (PTL) (121, 122), die jeweils auf einer der Membranseiten (S1, S2) angeordnet sind und eine Diffusorstruktur zur Oberflächenverteilung und/oder Sammlung von Fluidprozessströmen des katalysatorbeschichteten Membranelements (110) bilden;
eine Klebeschicht (150), die auf dem Umfangsbereich (115) des katalysatorbeschichteten Membranelements (110) auf derselben Membranseite (S1, S2) wie das Rahmenelement (140) angeordnet ist und einen Klebeüberlappungsabschnitt (151) umfasst, der das Rahmenelement (140) überlappt und eine Klebeverbindung zwischen dem katalysatorbeschichteten Membranelement (110) und mindestens dem Rahmenelement (140) herstellt, wobei sich der Klebeüberlappungsabschnitt (151) in Bezug auf den Umfangsbereich (115) über den Rahmenüberlappungsabschnitt (141) hinaus nach innen erstreckt, um einen Prozessbereich (116) des katalysatorbeschichteten Membranelements (110) abzugrenzen,
die Membran-Elektroden-Anordnung ist charakterisiert durch:
mindestens eine oder beide der PTLs (121, 122) bestehen aus einem metallbasierten Werkstoff, insbesondere ausgewählt aus Titan, mit Platin beschichtetem Titan und Nickel.
wobei es sich bei der PTL (121) auf der gleichen Membranseite (S1) wie das Rahmenelement (140) um die mindestens eine metallbasierte PTL (121) handelt, die auf einer Anodenseite einer der Membranseiten (S1) angeordnet und aufgrund ihrer metallbasierten Konstruktion starr ist,
und wobei eine der PTLs (121, 122) die andere PTL (122) ist, die auf der anderen Membranseite (S2) angeordnet ist und den Randbereich (115) überlappt,
und wobei das CCM-Element (110) einen Membranabschnitt (117) umfasst, der im Randbereich (115) einen unbeschichteten Oberflächenabschnitt aufweist, der eine polymere Oberfläche der Polymermembran (111) auf beiden Membranseiten (S1, S2) freilegt und so eine poröse Struktur bildet, und die andere PTL (122) einen Verbindungsabschnitt (125) umfasst, der eine Substanz-zu-Substanz-Verbindung mit dem katalysatorbeschichteten Membranelement (110) bildet, wobei der Verbindungsabschnitt (125) die poröse Struktur umfasst, in die während des Klebevorgangs ein Polymer der Polymermembran (111) eingedrungen ist, um eine mechanische und elektrische Substanz-zu-Substanz-Verbindung zwischen der Polymermembran (111) und der jeweiligen PTL (121, 122) herzustellen.

2. Membran-Elektroden-Anordnung (100) nach Anspruch 1, wobei die PTL (121, 122), die sich auf derselben Membranseite (S1, S2) wie das Rahmenelement (140) befindet, seitlich vom Rahmenüberlappungsbereich (141) auf dem Klebeüberlappungsbereich (151) angeordnet ist, der sich zumindest teilweise mit dem Prozessbereich (116) überlappt, wobei der Klebeüberlappungsbereich (151) eine Klebeverbindung zwischen dem katalysatorbeschichteten Membranelement (110) und der PTL (121, 122) bildet.

3. Die Membran-Elektroden-Anordnung (100) nach Anspruch 2, wobei die PTL (121, 122) angrenzend an den Rahmenüberlappungsbereich (141) angeordnet ist und einen umlaufenden Spalt (CG) bildet, der die PTL (121, 122) und den Rahmenüberlappungsbereich (141) trennt, und/oder
wobei die PTL (121, 122) in direktem Kontakt mit dem Rahmenüberlappungsabschnitt (141) angeordnet ist.

4. Die Membran-Elektroden-Anordnung (100) nach Anspruch 3, wobei der Umfangsspalt (CG) zumindest teilweise mit einem Klebstoff (155) gefüllt ist, der sich vorzugsweise vom Klebstoffüberlappungsbereich (151) erstreckt.
wobei vorzugsweise das Klebematerial mit der Klebeschicht (150) identisch oder davon verschieden ist, und/oder
wobei es sich bei dem Klebstoff (155) vorzugsweise um einen verfestigten Klebstoff aus der Klebstoffschicht (150) handelt, der durch den Umfangsspalt (CG) aufgrund der Druckausübung auf die Klebstoffschicht (150) mit dem PTL (121, 122) aufgenommen wurde.

5. Die Membran-Elektroden-Anordnung (100) nach einem der Ansprüche 2 bis 4, wobei das katalysatorbeschichtete Membranelement (110), die Klebeschicht (150) und das Rahmenelement (140) in Stapelrichtung in dieser Reihenfolge gestapelt sind, wobei sich das Rahmenelement (140) zumindest im Bereich der Rahmenüberlappung (141) von der Klebeschicht (150) in Stapelrichtung über die eine PTL (121, 122) hinaus erstreckt.

6. Die Membran-Elektroden-Anordnung (100) nach Anspruch 1, wobei die PTL (121, 122), die sich auf derselben Membranseite (S1, S2) wie das Rahmenelement (140) befindet, auf dem Rahmenelement (140) so angeordnet ist, dass sie mindestens den Rahmenüberlappungsbereich (141) und zumindest teilweise den Prozessbereich (116) überlappt.

7. Die Membran-Elektroden-Anordnung (100) nach einem der vorhergehenden Ansprüche,
wobei das andere der PTLs (121, 122), das sich auf der anderen Membranseite (S1, S2) als Rahmenelement (140) befindet, aus einem kohlenstoffbasierten Material besteht.

8. Die Membran-Elektroden-Anordnung (100) nach einem der vorhergehenden Ansprüche, wobei die Katalysatorbeschichtung (112, 113) die Polymermembran (111) auf mindestens einer ihrer Seiten (S1, S2) zumindest teilweise bedeckt, wobei das katalysatorbeschichtete Membranelement (110) vorzugsweise mindestens einen Membranabschnitt (117) umfasst, der eine von der Katalysatorbeschichtung (112, 113) verschiedene Oberflächenstruktur aufweist, beispielsweise einen unbeschichteten Oberflächenabschnitt (117), der eine Polymeroberfläche der Polymermembran (111) freilegt, und der sich besonders bevorzugt im Randbereich (115) erstreckt, wobei vorzugsweise der Membranabschnitt (117) und eine gegenüberliegende Oberfläche (123) eines der PTLs (121, 122) eine Stoff-zu-Stoff-Bindung bilden.

9. Die Membran-Elektroden-Anordnung (100) nach einem der vorhergehenden Ansprüche, wobei die Katalysatorbeschichtung (112, 113) die Polymermembran (111) auf mindestens eine der Membranseiten (S1, S2) vollständig bedeckt, wobei sich die PTL (121, 122) auf der anderen Membranseite (S1, S2) vorzugsweise mit einem peripheren Randabschnitt (124) zumindest teilweise über den peripheren Bereich (115) hinaus erstreckt, um eine Haftfläche für die Klebeverbindung mit dem Rahmenelement (140) zu bilden.

10. Die Membran-Elektroden-Anordnung (100) nach einem der vorhergehenden Ansprüche, wobei sich die Klebeschicht (150) mit dem Klebeüberlappungsbereich (151) auf dem CCM-Element (110) zumindest teilweise oder vollständig mit dem Rahmenüberlappungsbereich (141) erstreckt, und/oder
wobei die Klebeschicht (150) einen dem Klebeüberlappungsbereich (151) gegenüberliegenden Kleberandabschnitt (152) aufweist, wobei sich der Kleberandabschnitt (152) vom Klebeüberlappungsbereich (151) über den Randbereich (115) hinaus erstreckt oder wobei sich der Klebeüberlappungsbereich (151) bis zu einer Randkante (119) des Randbereichs (115) erstreckt.

11. Die Membran-Elektroden-Anordnung (100) nach einem der vorhergehenden Ansprüche, wobei die Klebeschicht (150)
- umfasst ein elektrochemisch inertes Material,
- ist ein Klebefilm und/oder
- umfasst ein Polymer, ausgewählt aus der Gruppe bestehend aus Epoxiden, Urethanen, Polyisobutylen, Polyolefinen, Polyethylen und härtbaren Vernetzungsmitteln.

12. Ein Festpolymerelektrolyt-Elektrolysezellenstapel, **charakterisiert durch** eine Reihenschaltung mehrerer Membranelektrodenanordnungen (100) gemäß einem der vorhergehenden Ansprüche.

13. Verfahren zur Herstellung der Membran-Elektroden-Baugruppe (100) nach einem der Ansprüche 1 bis 11, umfassend die folgenden Schritte:
- Erlangung des CCM-Mitglieds (110);
- Beschaffung des Rahmenbauteils (140);
- die beiden PTLs (121, 122) erhalten;
- Herstellung der Klebeschicht (150);
**gekennzeichnet dadurch, dass**
- das katalysatorbeschichtete Membranelement (110), die PTLs (121, 122), das Rahmenelement (140) und die Klebeschicht (150) so übereinander gestapelt sind, dass
∘ das Rahmenelement (140) sich auf einer der Membranseiten (S1, S2) befindet;
∘ die Klebeschicht (150) sich zwischen dem Rahmenelement (140) und dem CCM-Element (110) befindet;
∘ eine der PTLs (121, 122) sich innerhalb oder zumindest teilweise auf dem Rahmenelement (140) befindet;
∘ das andere der PTLs (121, 122) sich neben dem katalysatorbeschichtete Membranelement (110) auf der anderen Seite der Membran (S1, S2) befindet;
- das katalysatorbeschichtete Membranelement (110), des Rahmenelements (140) und der Klebeschicht (150) so ausgerichtet wird, dass
∘ sowohl der periphere Bereich (115) des katalysatorbeschichteten Membranelements (110) als auch der Rahmenüberlappungsbereich (141) sich im Querschnitt zumindest teilweise mit dem Klebeüberlappungsbereich (151) überlappen.
∘ der Klebeüberlappungsbereich (151) sich in Bezug auf den Umfangsbereich (115) über den Rahmenüberlappungsbereich (141) hinaus nach innen erstreckt, um den Prozessbereich (116) des katalysatorbeschichteten Membranelements (110) abzugrenzen; und
- die Klebeschicht (150) zumindest im Bereich der Klebeüberlappung (151) so aktiviert wird, dass die Klebeschicht (150) das Rahmenelement (140) und die PTL (121, 122) mit dem katalysatorbeschichteten Membranelement (110) verbindet.

14. Verwendung der Membran-Elektroden-Anordnung (100) nach einem der Ansprüche 1 bis 11 oder des Festpolymer-Elektrolyseurzellenstapels nach Anspruch 12 zur Elektrolyse von Wasser.

## Revendications

1. Un ensemble membrane-électrode (100) pour une cellule d'électrolyseur empilable, comprenant :
un élément de membrane revêtue de catalyseur (CCM) (110) formant une unité centrale électrochimiquement active de l'ensemble membrane-électrode (100), comprenant :
une membrane polymère (111) formant un électrolyte solide pour l'échange d'ions entre ses deux faces opposées (S1, S2), et
un revêtement catalytique (112, 113) réceptif aux électrons, appliqué au moins partiellement sur les deux côtés de la membrane (S1, S2), chacun formant une électrode pour conduire les électrons associés à l'échange d'ions au niveau de la membrane polymère (111) ;
un élément de cadre (140) pour le renforcement mécanique, l'élément de cadre (140) étant disposé sur l'un des côtés de la membrane (S1, S2) chevauchant une zone périphérique (115) de l'élément CCM (110) avec une section de chevauchement de cadre (141) ; et
deux couches de transport poreuses (PTL) (121, 122), chacune disposée sur l'un des côtés de la membrane (S1, S2), formant une structure de diffuseur pour la distribution de surface et/ou la collecte des flux de processus fluides de l'élément CCM (110) ;
une couche adhésive (150) prévue sur la zone périphérique (115) de l'élément CCM (110) du même côté membrane (S1, S2) que l'élément de cadre (140), comprenant une section de recouvrement adhésive (151) qui chevauche l'élément de cadre (140), formant une liaison adhésive entre l'élément CCM (110) et au moins l'élément de cadre (140), la section de recouvrement adhésive (151) s'étendant vers l'intérieur par rapport à la zone périphérique (115) au-delà de la section de recouvrement du cadre (141) pour délimiter une zone de traitement (116) de l'élément CCM (110),
l'ensemble membrane-électrode étant **caractérisé par** :
au moins une ou les deux PTL (121, 122) sont constituées d'un matériau à base de métal, en particulier choisi parmi le titane, le titane recouvert de platine et le nickel,
dans lequel au moins le PTL (121) du même côté de la membrane (S1) que l'élément de cadre (140) est au moins un PTL à base métallique (121), qui est disposé du côté anodique de l'un des côtés de la membrane (S1) et est rigide en raison de sa construction à base métallique,
et dans lequel l'un des PTL (121, 122) est l'autre PTL (122) disposé sur l'autre côté de la membrane (S2), chevauchant la zone périphérique (115), et dans lequel l'élément CCM (110) comprend une section de membrane (117), qui comprend au niveau de la zone périphérique (115) une section de surface non revêtue exposant une surface polymère de la membrane polymère (111) sur les deux côtés de la membrane (S1, S2) créant une structure poreuse, et l'autre PTL (122) comprend une section de jonction (125) formant une liaison substance-substance avec l'élément CCM (110), dans laquelle la section de jonction (125) comprend la structure poreuse dans laquelle un polymère de la membrane polymère (111) s'est écoulé lors de la liaison, de manière à former une connexion mécanique et électrique substance-substance entre la membrane polymère (111) et le PTL respectif (121, 122).

2. L'ensemble membrane-électrode (100) selon la revendication 1, dans lequel le PTL (121, 122), qui se trouve du même côté de la membrane (S1, S2) que l'élément de cadre (140), est disposé latéralement à partir de la section de chevauchement du cadre (141) sur la section de chevauchement adhésive (151) chevauchant au moins partiellement la zone de traitement (116), la section de chevauchement adhésive (151) formant une liaison adhésive entre l'élément CCM (110) et le PTL (121, 122).

3. L'ensemble membrane-électrode (100) selon la revendication 2, dans lequel la PTL (121, 122) est disposée à proximité de la section de chevauchement du cadre (141), formant un espace circonférentiel (CG) séparant la PTL (121, 122) et la section de chevauchement du cadre (141), et/ou
dans lequel le PTL (121, 122) est disposé en contact direct avec la section de chevauchement du cadre (141).

4. L'ensemble membrane-électrode (100) selon la revendication 3, dans lequel l'espace circonférentiel (CG) est au moins partiellement rempli d'un matériau adhésif (155), s'étendant de préférence à partir de la section de chevauchement adhésive (151),
dans lequel, de préférence, le matériau adhésif est identique ou différent de la couche adhésive (150), et/ou
dans lequel de préférence le matériau adhésif (155) est un adhésif solidifié à partir de la couche adhésive (150) reçu par l'espace circonférentiel (CG) à partir d'une application de pression sur la couche adhésive (150) avec le PTL (121, 122).

5. L'ensemble membrane-électrode (100) selon l'une quelconque des revendications 2 à 4, dans lequel l'élément CCM (110), la couche adhésive (150) et l'élément de cadre (140) sont empilés dans une direction d'empilement dans cet ordre, dans lequel l'élément de cadre (140) s'étend au moins au niveau de la section de chevauchement du cadre (141) à partir de la couche adhésive (150) dans la direction d'empilement au-delà d'un PTL (121, 122).

6. L'ensemble membrane-électrode (100) selon la revendication 1, dans lequel le PTL (121, 122), qui se trouve du même côté de la membrane (S1, S2) que l'élément de cadre (140), est disposé sur l'élément de cadre (140) en chevauchant au moins la section de chevauchement du cadre (141) et au moins partiellement la zone de traitement (116).

7. L'ensemble membrane-électrode (100) selon l'une quelconque des revendications précédentes,
dans lequel l'autre des PTL (121, 122), qui se trouve de l'autre côté de la membrane (S1, S2) en tant qu'élément de cadre (140), est fait d'un matériau à base de carbone.

8. L'ensemble membrane-électrode (100) selon l'une quelconque des revendications précédentes, dans lequel le revêtement catalytique (112, 113) recouvre la membrane polymère (111) sur au moins une de ses faces (S1, S2), au moins partiellement, l' élément CCM (110) comprenant de préférence au moins une section de membrane (117) présentant une structure de surface différente de celle du revêtement catalytique (112, 113), par exemple une section de surface non revêtue (117) exposant la surface polymère de la membrane polymère (111), et s'étendant de préférence dans la zone périphérique (115).
dans lequel de préférence la section de membrane (117) et une surface opposée (123) de l'un des PTL (121, 122) forment une liaison substance-substance.

9. L'ensemble membrane-électrode (100) selon l'une quelconque des revendications précédentes, dans lequel le revêtement de catalyseur (112, 113) recouvre complètement la membrane polymère (111) sur au moins l'un des côtés de la membrane (S1, S2), dans lequel de préférence le PTL (121, 122) sur l'autre côté de la membrane (S1, S2) s'étend avec une section de bord périphérique (124) au moins partiellement au-delà de la zone périphérique (115) pour fournir une surface de liaison pour le collage adhésif avec l'élément de cadre (140).

10. L'ensemble membrane-électrode (100) selon l'une quelconque des revendications précédentes, dans lequel la couche adhésive (150) s'étend avec la section de recouvrement adhésive (151) sur l'élément CCM (110) au moins partiellement ou complètement avec la section de recouvrement du cadre (141), et/ou
dans lequel la couche adhésive (150) comprend une section périphérique adhésive (152) faisant face à la section de chevauchement adhésive (151), dans laquelle la section périphérique adhésive (152) s'étend de la section de chevauchement adhésive (151) au-delà de la zone périphérique (115), ou dans laquelle la section de chevauchement adhésive (151) s'étend jusqu'à être au même niveau qu'un bord périphérique (119) de la zone périphérique (115).

11. L'ensemble membrane-électrode (100) selon l'une quelconque des revendications précédentes, dans lequel la couche adhésive (150)
- comprend un matériau électrochimiquement inerte,
- est un film adhésif, et/ou
- comprend un polymère choisi parmi le groupe comprenant les époxydes, les uréthanes, le polyisobutylène, les polyoléfines, le polyéthylène et les agents de réticulation durcissables.

12. Une pile de cellules d'électrolyseur à électrolyte polymère solide, **caractérisée par** comprenant une série d'empilements d'une pluralité d'ensembles d'électrodes à membrane (100) selon l'une quelconque des revendications précédentes.

13. Procédé de fabrication de l'ensemble membrane-électrode (100) selon l'une des revendications 1 à 11, comprenant les étapes suivantes :
- obtention du membre CCM (110) ;
- obtention de l'élément de cadre (140) ;
- obtenir les deux PTL (121, 122) ;
- obtention de la couche adhésive (150) ;
**caractérisé par**
- empiler l'élément CCM (110), les PTL (121, 122), l'élément de cadre (140) et la couche adhésive (150) de telle sorte que
∘ l'élément de cadre (140) est situé sur l'un des côtés de la membrane (S1, S2) ;
∘ la couche adhésive (150) est située entre l'élément de cadre (140) et l'élément CCM (110) ;
∘ l'un des PTL (121, 122) est situé à l'intérieur ou au moins partiellement sur l'élément de cadre (140) ;
∘ l'autre des PTL (121, 122) est situé à côté du membre CCM (110) sur l'autre côté de la membrane (S1, S2) ;
- aligner l'élément CCM (110), l'élément de cadre (140) et la couche adhésive (150) de sorte que
∘ chacune des zones périphériques (115) de l'élément CCM (110) et de la section de chevauchement du cadre (141) chevauche au moins partiellement la section de chevauchement adhésive (151) lorsqu'elle est vue en coupe transversale, et
∘ la section de chevauchement adhésif (151) s'étend vers l'intérieur par rapport à la zone périphérique (115) au-delà de la section de chevauchement du cadre (141) pour délimiter la zone de traitement (116) de l'élément CCM (110) ; et
- activer la couche adhésive (150) au moins au niveau de la section de chevauchement adhésive (151) de sorte que la couche adhésive (150) colle l'élément de cadre (140) et le PTL (121, 122) à l'élément CCM (110).

14. Utilisation de l'ensemble membrane-électrode (100) de l'une des revendications 1 à 11 ou de la pile de cellules d'électrolyseur à électrolyte polymère solide de la revendication 12 pour l'électrolyse de l'eau.
